# EUROPEAN PATENT APPLICATION

(11) **EP 2 264 273 A2**
(43) Date of publication of application: **22.12.2010**
(21) Application number: 09170054.2
(22) Date of filing: 11.09.2009
(51) Int. Cl.: E06B 9/266

(54) **Window covering and the method of making the same**

(30) Priority: 16.06.2009 TW 98120140
(71) Applicant: Nien Made Enterprise Co., Ltd., Taichung City 408 (TW)
(72) Inventor: Nien, Ming, 505 Lugang Township (TW); Chen, Tung-Jung, 506 Fuxing Township (TW)
(74) Representative: Viering, Hans-Martin

(57) **Abstract**

A window covering has at least an element made of polyethylene terephthalate mixed with a filler, wherein the polyethylene terephthalate has a melt strength greater than 500Pa · s, and a ratio of the filler is between 2% and 40% by weight, and the polyethylene terephthalate is mixed with the filler in an environment with the temperature between 200°C and 350°C. The mixture is put into an extruder for extrusion to have a long member, and then the long member is cooled for solidification and is cut to make the window covering element. The element of the window covering has a well rigidity, heat resistant, and light fastness property, and most of all, it is recyclable.

## Description

### BACKGROUND OF THE INVENTION

### 1. Field of the Invention

The present invention relates generally to a window covering, and more particularly to a window covering made of recycled polyethylene terephthalate (PET).

### 2. Description of the Related Art

Typically, common plastics for making slats of a window covering include polyvinyl chloride (PVC), acrylonitrile butadiene styrene (ABS), and polystyrene (PS). These plastics, however, are not recyclable materials. Some recyclable materials are used to make the slats of the window covering, including polyLactic acid (PLA), which is a bio-decomposable plasticized material, wood-polymer composites (WPC), which is constructed from mixing wood fibers and plant fibers, and polypropylene (PP). These materials, however, are too expensive for the final window covering products to be accepted by consumers. To fix such problem, some use polyethylene terephthalate (PET), which is easy to get and recyclable, to make the slats of the window covering. PET may be gotten from the recycled drink bottles. The viscosity of normal PET is low, and the recycled PET has a lower viscosity because the molecular weight thereof is reduced thus the molten recycled PET has a faster flow rate and it is hard for molding. As a result, there is still no PET slat used in the window covering products in the present market.

To fix the insufficient viscosity and faster flow rate of recycled PET, some had added specific chemical materials into PET to raise the molecular weight thereof. Such chemical materials include bifuntional epoxy resin and steric hindered hydroxyphenylalkyl phosphonate. Some adds epoxide into PET to change PET's property. However, adding epoxide will cause some problems, including producing gel, insufficient viscosity, and unstable thermal property, that no one uses this process to make slats. In conclusion, the present PET still has some problems to make slats of the window covering, including insufficient machinable property, insufficient thermal resistance, etc. Some PET slats will be warped by exposure under sun for a long time because of the insufficient thermal resistance. In finding a way of raising the viscosity of PET, it should be aware of the viscosity of PET cannot be too high because the PET with a high viscosity may affect molding also. So, how to get PET with a proper viscosity for making the slats of the window covering is the purpose of this invention.

### SUMMARY OF THE INVENTION

The primary objective of the present invention is to provide a window covering and the method of making the same, which has a many advantages, including ease for machining and molding. The window covering of the present invention has good hardness and thermal resistance, and more particularly, it uses recyclable material and is environmental friendly.

According to the objective of the present invention, a method of making a window covering, which has at least an element made of polyethylene terephthalate, includes the steps of mixing a modified polyethylene terephthalate having a melt strength greater than 500Pa · s with a filler of 2% to 40% by weight in an environment with a temperature in a range between 200°C and 350°C to form a mixture, and then putting the mixture in an extruder for extrusion to form a long member, cooling the long member; and then cutting the long member to form elements of the window covering.

### BRIEF DESCRIPTION OF THE DRAWINGS

FIG. 1 is a perspective view of the window covering;
FIG 2 is a sectional view of the elements of the window covering;
FIG. 3 is a flow chart of the method of a preferred embodiment of the present invention;
FIG. 4 is a diagram, showing the relationship of the ratio of the additive and warp of the slat; and
FIG. 5 is a diagram, showing the relationship of the ratio of the additive and the melt strength of modified PET under the thermal resistance requirement of the window covering.

### DETAILED DESCRIPTION OF THE INVENTION

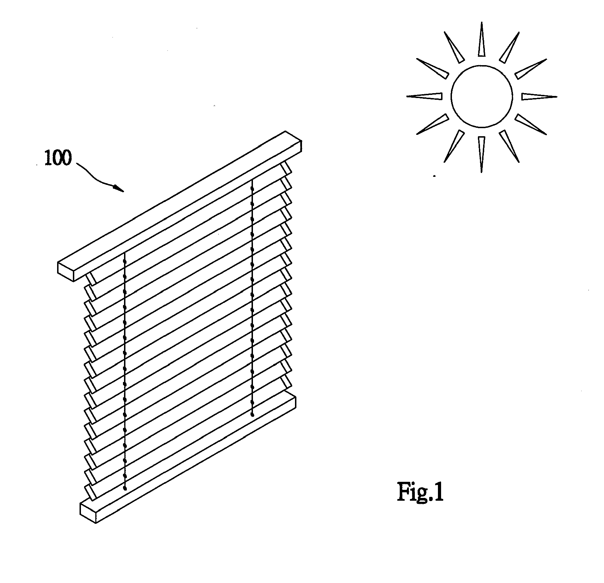

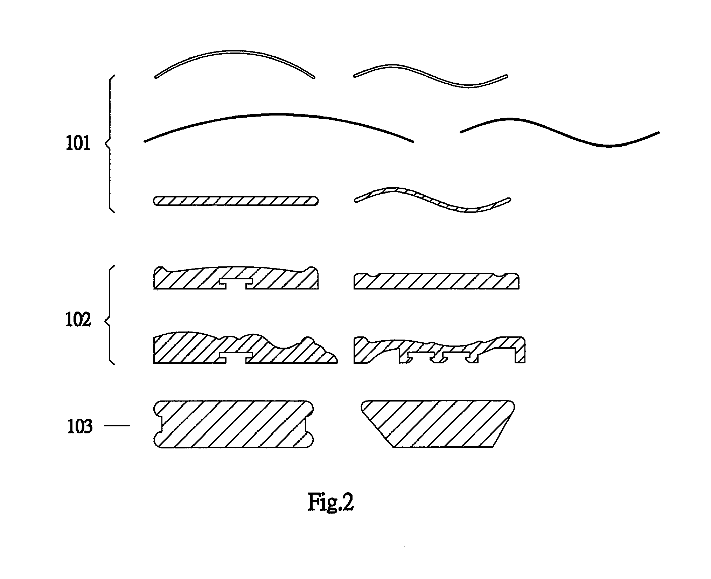

FIG. 1 shows a window covering 100 made by a method of the preferred embodiment of the present invention. The method of the present invention may be used to make elements of the window covering 100, such as slats 101, as shown in FIG. 2, valance 102, upper and lower rails 103 of the window covering 100. The detail of the method of the present invention is described in the following:

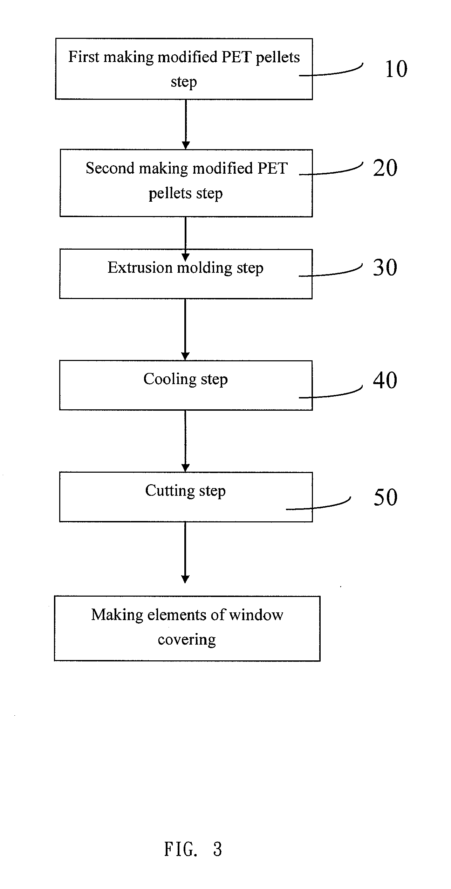

As shown in FIG. 3, the steps of the method of the present invention includes a first step 10 making modified PET pellets, a second step 20 making modified PET pellets, a step 30 for extrusion molding, a cooling step 40, and a cutting step 50.

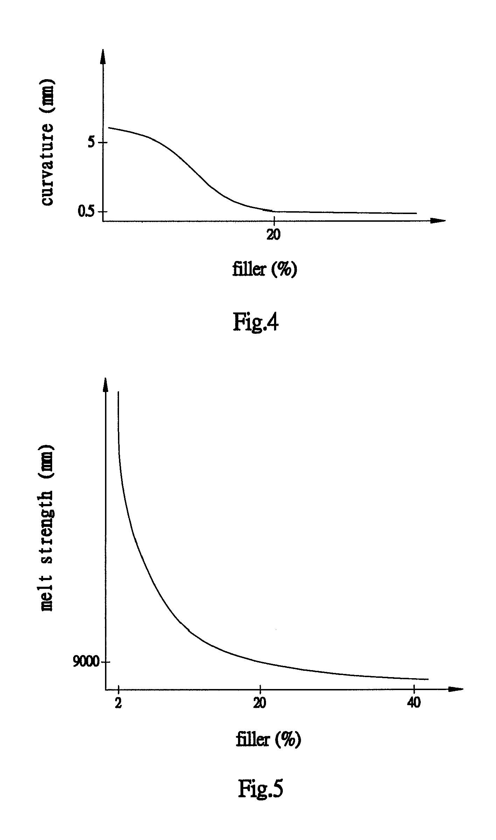

The first step 10 making modified PET pellets includes mixing a PET raw material, such as chips of recycled PET bottles of linear polyester, with a coupling agent and a catalyst for modify reaction to form first modified polyethylene terephthalate (PET) pellets with a melt strength greater than 500Pa · s. The coupling agent is a chemical compound with two or more epoxy groups to raise the molecular weight of polyester. The catalyst is a metal carboxylate. It should be mentioned here that a way of measuring the melt strength is using a melt strength meter measuring a sample element with 2cm length and width, and 2mm thickness. The sample element is put in 280°C nitrogen, and is twisted and vibrated. The second step 20 making modified PET pellets includes the step of mixing the first modified PET pellets with filler and auxiliary agents to get second modified PET pellets. A ratio of the filler of the present invention is better to be between 2% and 40% by weight. It may be selected from talcum, calcium carbonate, calcium oxide, aluminum oxide, silica, mica, whisker, kaolin, and aluminum hydroxide. The purpose of adding the filler is to raise the thermal resistance of the window covering, and normally, the higher ratio of the filler will get a better performance. For example, adding talcum powder into the polyester to make the slats, we test to find the relationship of the heat deflection temperature (HDT) of the slat and different ratios of talcum powder added into the slat under a condition of the slat having the same length and interval of ladder strings (it indicates a distance between ladder strings on the slat), and the result of the test shows the higher ratio of talcum powder leading a less deflection of the slat. This result indicates that the slat with the added talcum does not tend to deflect in a high temperature environment. As shown in FIG. 4, using the modified PET with a melt strength of 9,000Pa · s and added with 20% by weight of talcum powder minimize the deflection and has a preferable tolerated deflection range under 0.5mm. Under a condition of the slat having a good thermal-resistance property, FIG. 5 shows a relationship of the melt strength of the modified PET and the ratio of the filler, the result shows that the modified PET with higher melt strength uses less filler. Vice versa. Also, a proper ratio of the talcum powder may help in raising the viscosity of the polyester for molding. However, too much talcum powder will cause the viscosity to be too high which is not good for molding. Therefore, a preferable ratio of the talcum powder is between 2% and 40% by weight. Adding talcum powder may cause the slat having a smooth surface and lower the cost of manufacture.

The purpose of adding the auxiliary agents is to raise the performance property of the product. For example, the slats of the window covering are required to be uninflammable and lower the damage caused by ultraviolet rays. Therefore, the auxiliary agent of the present invention includes ultraviolet rays absorbent, flame retardant, and antioxidant. These agents are described in following paragraphs.

The function of the ultraviolet rays absorbent is to provide the window covering having a capacity of absorbing ultraviolet rays that provides the window covering with a superior optical stable function. In the present invention, the ultraviolet rays absorbent may be selected from 2-Hydroxy-4-methoxybenzophenone, 2-Hydroxy-4-methoxy-2'-hydroxybenzophenone, 2,4,5-trihydroxybutyrophenone, and/or p-t-butylphenyl salicylate.

The flame retardant, depends on client's need, has a function of deter or delay the fire flame. In other words, if the window covering is asked for higher fireproof, the flame retardant should be added, and if not, it is no need to add flame retardant. The flame retardant of the present invention may be selected from brominated flame retardant, sulphosuccinic acid ester flame retardant and other relative flame retardants, which are well compatible with polyester and may provide a high thermal stable capacity, and to absorb heat and dilute oxygen.

The antioxidant may prevent the lowering of the molecular weight of the modified PET in the manufacturing process. The antioxidant of the present invention may be selected from hindered phenol antioxidant, such as p-t-butylhydroxy toluene and p-t-butylhydroxy anisole, and sulfur antioxidant, such as distearyl thiodipropionate, and thiodipropionate.

With aforesaid auxiliary agents, it may enhance the physical property of the window covering. There are some other auxiliary agents may be added according to the function requirement, such as antistatic agent and colorant.

The pellets may be made into solid type window covering elements or foam type window covering elements by adding volatile foaming agent.

The volatile foaming agent helps the fabrication process, and it's working temperature should be kept in a suitable range. Working temperature too high will produce too many bubbles and form a surface not smooth, and working temperature too low will increase the viscosity thereof. A preferable working temperature is between 200°C and 350°C. The foaming agent of the present invention may be selected from propane, butadiene, butane, isobutene, pentane, neopentane, isopentane, hexane, butadiene, chloromethane, dichloromethane, chlorodifluoromethane, fluor trichlorofluoromethane, dichlorodifluoromethane, monochlorodifluoromethane, fluorohydrocarbon, HCFC-22, HCFC-123, HCFC141b, HCFC142b, HFC134a, and HFC-152a. The foaming agent may be inert gas with a lower greenhouse effect coefficient, such as carbon dioxide, nitrogen, and argon. The foaming agent may be chemical foaming agent also, including various organic and inorganic thermal decomposition foaming agents. The organic foaming agent includes p-Toluenesulfonyl semicarbazide (normal decomposition temperature is 220∼235°C), nitro guanidine (235∼240°C), semioxamazide (230∼250°C), 5-Phenyltetrazole (about 210∼250°C), hydorazylcarbonylamide (240∼260 °C ), trihydrazynotriazine (260-270 °C ), and diisopropylazodicarboxylate (about 260∼300°C). The inorganic foaming agent includes barium azodicarboxylate (240-250 °C ), strontium azodicarboxylate, strontium potassium azodicarboxylate, aluminum hydroxide (230∼260°C), and magnesium hydroxide (300-400°C).

The extrusion molding step 30 includes the steps of putting the second modified PET pellets into an extruder (not shown in the diagram) with a temperature between 200°C and 350°C, and then operating the extruder melting the pellets and extruding it out in a constant speed. The molten pellets may be extruded out as a long member or a thin plate to make the slats.

The long member from the extruder still has a high temperature that the cooling step 40 is to lower the temperature of the long member and to solidify it. In the present invention, the cooling step 40 is achieved by vacuum molding and water-cooling to solidify the long member.

The cutting step 50 is to cut the solidified long member into plural of short members with a predetermined length to make the window covering.

The above description is the method of the present invention to make the window covering. It has to be mentioned that the method of the present invention is not limited only in the above description. It still has other equivalent steps, such as, the present invention provides two steps to make the PET pellets, and it can only take one step to make the PET pellets, including mixing the chips of recycled PET bottles with a coupling agent, a catalyst and other agents to make modified PET pellets, and then performing the extrusion molding step, the cooling step, and the cutting step as described above. Another alternate method includes putting the chips of recycled PET bottles with a coupling agent, a catalyst, filler, and other agents into an extruder directly for extrusion procedure, and then performing the cooling and cutting steps as described above.

The window covering of the present invention includes the modified PET with a melt strength greater than 500 Pa · s that solve the problem of the conventional PET resin with insufficient viscosity and fast flow rate of molten PET for molding the window covering elements. The present invention adds filler of 2% to 40% by weight that increases the molecular weight of the modified PET and increases the anti-deformation capacity of the window covering against heat and pressure. In conclusion, the present invention uses the properties of conventional PET resin's good tenacity, light weight, and recyclable, and the modified PET, with the melt strength greater than 500 Pa · s, has a better property for machining, and the filler increases the heat-resistant property. All of that makes the modified PET resin's possibility to make the window covering elements. Besides, PET may be obtained from the recycled PET bottles. It could reduce the cost of manufacture hugely, and furthermore, it is recyclable. It has to be mentioned that the modified PET of the present invention with the melt strength greater than 500 Pa · s is made from linear polyester. However, the non-linear polyester still may be made into the modified PET of the present invention. There are many other ways to increase the melt strength of PET by adding the coupling agent with two or more epoxide groups and catalyst. Any method that may increase the melt strength of PET, as long as the modified PET has a melt strength greater than 500 Pa · s, may be incorporated in the present invention.

In the embodiment of the present invention, the modified PET may formed by performing one-step pellets making procedure, two-step pellets making procedure, three-step pellets making procedure or more. There may be no need to make it s separate step to make the modified PET into pellet and directly extrude the window covering elements after modify the property of the recycled PET. We find that when the polyethylene terephthalate (PET) with a melt strength greater than 500 Pa · s is mixed with filler of 2% to 40% by weight, it may make the window covering with well rigidity, heat-resistant, light fastness, and recyclable purpose.

The description above is just a few preferred embodiments of the present invention and the equivalence of the present invention is still in the scope of the claim of the present invention.

## Claims

1. An element, which is applied in a window covering, made of polyethylene terephthalate mixed with a filler, wherein the polyethylene terephthalate has a melt strength greater than 500Pa · s, and a ratio of the filler is between 2% and 40% by weight.

2. The element as defined in claim 1, wherein the polyethylene terephthalate is made of saturated polyester mixed with a coupling agent and a catalyst.

3. The element as defined in claim 1, wherein the filler is selected from a group consisting of talcum, calcium carbonate, calcium oxide, aluminum oxide, silica, mica, whisker, kaolin, and aluminum hydroxide..

4. The element as defined in claim 1, wherein the polyethylene terephthalate further is mixed with a foaming agent selected from a group consisting of propane, butadiene, butane, isobutene, pentane, neopentane, isopentane, hexane, butadiene, chloromethane, dichloromethane, chlorodifluoromethane, fluor trichlorofluoromethane, dichlorodifluoromethane, monochlorodifluoromethane, fluorohydrocarbon, HCFC-22, HCFC-123, HCFC141b, HCFC142b, HFC134a, and HFC-152a.

5. The element as defined in claim 1, wherein the polyethylene terephthalate further is mixed with a foaming agent selected from a group consisting of carbon dioxide, nitrogen, and argon.

6. The element as defined in claim 1, wherein the polyethylene terephthalate further is mixed with a foaming agent selected from a group consisting of p-Toluenesulfonyl semicarbazide, nitro guanidine, semioxamazide, 5-Phenyltetrazole, hydorazylcarbonylamide, trihydrazynotriazine, diisopropylazodicarboxylate, barium azodicarboxylate, strontium azodicarboxylate, strontium potassium azodicarboxylate, aluminum hydroxide, and magnesium hydroxide.

7. The element as defined in claim 1, wherein the polyethylene terephthalate further is mixed with a brominated flame retardant.

8. The element as defined in claim 1, wherein the polyethylene terephthalate further is mixed with a sulphosuccinic acid ester flame retardant.

9. The element as defined in claim 1, wherein the polyethylene terephthalate further is mixed with an ultraviolet rays absorbent selected from a group consisting of 2-Hydroxy-4-methoxybenzophenone, 2-Hydroxy-4-methoxy-2'-hydroxybenzophenone, 2,4,5-trihydroxybutyrophenone, and p-t-butylphenyl salicylate.

10. The element as defined in claim 1, wherein the polyethylene terephthalate further is mixed with a hindered phenol antioxidant selected from a group consisting of p-t-butylhydroxy toluene and p-t-butylhydroxy anisole

11. The element as defined in claim 1, wherein the polyethylene terephthalate further is mixed with a sulfur antioxidant selected from a group consisting of distearyl thiodipropionate and thiodipropionate.

12. The element as defined in claim 1, wherein the saturated polyester is a linear polyester, the coupling agent is a compound having two or more epoxy groups, and the catalyst is metal carboxylate.

13. A method of making a window covering, which has at least an element made of polyethylene terephthalate, comprising the steps of:
a) making a modified polyethylene terephthalate which has a melt strength greater than 500Pa · s;
b) mixing the modified polyethylene terephthalate with a filler of 2% to 40% by weight in an environment with a temperature in a range between 200°C and 350°C to form a mixture;
c) putting the mixture in an extruder for extrusion to form a window covering element.

14. A method of making a window covering, which has at least an element made of polyethylene terephthalate, comprising the steps of:
a) mixing saturated polyester with a coupling agent and a catalyst to form the modified polyethylene terephthalate; making a modified polyethylene terephthalate pellets which has a melt strength greater than 500Pa · s;
b) mixing the modified polyethylene terephthalate pellets with a filler of 2% to 40% by weight in an environment with a temperature in a range between 200°C and 350°C to form a mixture and made into a second pellets;
c) putting the second pellets into an extruder for extrusion to form a window covering element.

15. The method as defined in claim 14, wherein the saturated polyester is a linear polyester, the coupling agent is a compound which has two or more epoxy groups, and the catalyst is metal carboxylate.

16. A method of making a window covering, which has at least an element made of polyethylene terephthalate, comprising the steps of:
a) mixing a modified polyethylene terephthalate with a melt strength greater than 500 Pa · s with a filler of a ratio between 2% and 40% by weight in an environment with a temperature between 200°C and 350°C to form a mixture;
b) extruding the mixture to form a window covering element.
